Europäisches Patentamt

European Patent Office

Office européen des brevets

(11) Publication number : **0 474 437 A2**

# (12) EUROPEAN PATENT APPLICATION

(21) Application number : **91307942.2**

(22) Date of filing : **30.08.91**

(51) Int. Cl.⁵ : **B60T 15/18**

(30) Priority : **05.09.90 GB 9019404**

(43) Date of publication of application :
**11.03.92 Bulletin 92/11**

(84) Designated Contracting States :
**BE DE ES FR GB IT NL SE**

(71) Applicant : **BENDIX LIMITED**
**Douglas Road**
**Kingswood, Bristol BS15 2NL (GB)**

(72) Inventor : **Fogg, Stephen Walter**
**37 Millmead Road**
**Bath BA2 3JP (GB)**

(74) Representative : **Turner, Alan Reginald**
**BENDIX LIMITED Douglas Road**
**Kingswood, Bristol BS15 2NL (GB)**

(54) **Fluid pressure relay valve.**

(57)    In a compressed air pressure relay valve having an inlet valve and a vent valve only the inlet valve is operated by the pressure responsive member which responds to pressure at a control pressure port and a normally closed vent valve is independently operable by a pressure difference between delivered pressure and a balancing chamber a substantially one way path being provided for flow between the delivery port and the balancing chamber.

EP 0 474 437 A2

Jouve, 18, rue Saint-Denis, 75001 PARIS

FIG.1.

This invention relates to a fluid pressure relay valve more especially but not exclusively to a compressed air pressure relay valve.

Compressed air pressure relay valves are well known. A typical such valve may comprise a cast metal body having an input supply port a control pressure port a delivery port and a vent port. Within the body there is a piston sealingly slideable in a cylindrical bore, one side of the piston being in communication with the control pressure port and the other side of the piston being in communication with the delivery port. The piston movement is applied to a double inlet/exhaust valve which operates to connect the delivery port to the supply port or the vent port in a manner to produce a delivery port pressure which corresponds to the control port pressure. In such valves it is usual to arrange the double valve such that it is urged by the supply port pressure towards the inlet valve seating condition and control port pressure acts on the piston in a sense to urge a vent valve closure seat into engagement with the valve member to close off an axial vent passage and act on the valve member in a sense to open the communication from the supply pressure port to the delivery port. The valve thereby requires a predetermined initial control pressure to overcome the initial resistance of the valve member to such movement. Furthermore, because the vent passage through the movable double valve member is within the inlet valve dimensions the vent way through and therefore the response time for reducing delivery port pressure are constrained by the vent valve seat dimensions.

The object of the present invention is to provide an improved relay valve wherein the foregoing and other constraints are removed or substantially reduced.

According to the present invention there is provided a fluid pressure relay valve assembly comprising a housing having a control pressure port a supply pressure port a vent port a delivery port and a fluid pressure responsive member forming a movable wall between a first chamber in communication with the control pressure port and a second chamber communicable with the supply port and the delivery port, movement of said member in response to increase or decrease of the pressure in the first chamber relative to the second chamber being such as to respectively open or close an inlet valve between the supply port and the delivery port characterised in that said second chamber is communicable with the delivery port via means providing a substantially one-way path and means is provided operable to connect the delivery port to the vent port when the delivery port pressure exceeds the pressure in said second chamber.

In order that the invention may be more clearly understood and readily carried into effect the same will now be further described by way of examples with reference to the accompanying drawings of which:

Fig. 1, illustrates in sectional diagrammatic form a fluid pressure relay valve in accordance with one embodiment, and

Fig.2 and Fig. 3, illustrate alternative embodiments.

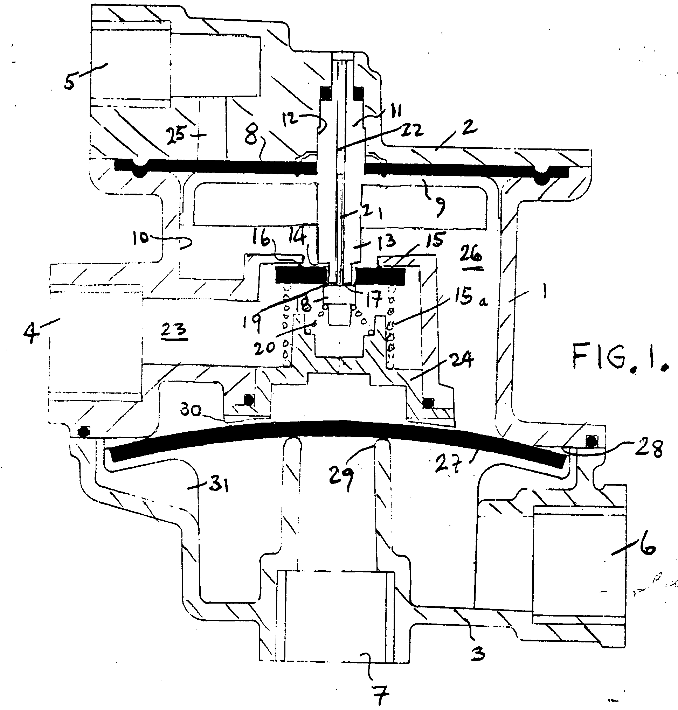

Referring to Fig. 1 of the drawings the relay valve assembly comprises a housing having a main valve body 1 and upper and lower cover parts 2 and 3 respectively. The main part 1 carries a supply port 4, a control port 5 being provided in the upper cover 2 and delivery and vent ports 6 and 7 being provided in the lower cover part 3. Sealingly clamped between the cover part 2 and the main body 1 there is the periphery of a flexible circular diaphragm 8 of synthetic rubber or the like attached at its centre to a cylindrical piston 9 guided for axial movement in a bore 10 of the housing. Piston 9 has a stem 11 sealingly carried in a stepped bore 12 of the cover part 2 and a stepped downward projection 13, of which the uppermost step 14 is engageable with a main inlet valve member 15 which is normally urged by a light spring 15a into engagement with its annular seat 16. The lower end 17 of projection 13 which is of smaller diameter to pass freely through an aperture 15a of the main valve member is sealingly engageable with an auxiliary valve member 18, itself normally urged into engagement with a seat 19 of the main member 15 by a light spring 20, which, like spring 15a, is supported by an inner cover part 24. The auxiliary valve member is guided for axial movement by a loose-fitting wire-like upward extension 21 in a small vented bore 22 of the piston 9 and the undersides of both valve members 15 and 18 are in communication with the supply pressure port 4 via a passage 23. The diaphragm 8 and piston 9 assembly forms a movable wall between a first chamber 25, above the diaphragm, in communication with the control pressure port 5 and a second or balancing chamber 26 beneath the diaphragm. Chamber 26 is seen to be communicable with the supply pressure port 4 via the valve member 15 or 18 when unseated and via the periphery of a flexible circular member 27 with the delivery port 6. The flexible member 27 is formed of synthetic rubber or the like, the upper peripheral annular surface of which sealingly engages an annular shoulder 28 and an inner central portion is also sealingly engageable with an upwardly projecting exhaust valve seat 29 which communicates with the vent port 7. The member 27 is also able to rest for location purposes in non-sealing manner against the lower annular part 30 of the inner cover 24 and internal ribs such as 31 are provided to limit the possible downward deflection of the periphery of member 27.

In operation of the valve assembly of Fig. 1, the port 4 is connected to a source of supply pressure, typically a compressed air reservoir, of a compressed air vehicle braking system. The control port 5 is connected to a control pressure source, typically a brake control valve and the delivery port 6 is typically connected to brake actuators the output force of which is to be controlled by the brake control valve.

In the condition shown in Fig. 1, the valve assembly has zero control pressure the delivery port 6 being vented via port 7 by upward deflection of the annular member 27. A light and fairly slow increase of the control pressure at port 5 communicated via chamber 25 to the upper surface of diaphragm 8 has the result that piston 9 moves downward so that the lower end 17 thereof is able to unseat the auxiliary valve member 18 from seat 19 to permit flow of supply air from port 4 via passage 23 to the chamber 26. The pressure in chamber 26 acts upwardly on the diaphragm 8 and the auxiliary valve member 18 may reclose against its seat at 19. Simultaneously, however the member 27 permits pressure in chamber 26 to flow past its periphery beneath shoulder 28 to the delivery port 6, venting being prevented at this time by the sealing engagement of member 27 with the annular seat 29. Subsequent increase of the control pressure results in corresponding increase in the delivered pressure at port 6 and the corresponding force of the brake actuators. Upon reduction of the control pressure at port 5, an upward deflection of the diaphragm 8 due to the excess pressure now in chamber 26 results in end 17 lifting from its annular sealing engagement with the upper surface of member 18 to permit venting of air from chamber 26 via vented bore 22. This venting may be accompanied by some return flow of compressed air via any imperfect sealing between the periphery of 27 and shoulder 28. Additionally the member 27 can lift from seat 29 under the influence of excess pressure in the delivery port 6 over that in chamber 26 to ensure delivery pressure venting which is rapid enough to closely follow the decline of control port pressure.

In the event of a rapid and more substantial increase of control pressure than is envisaged in the foregoing, the downward deflection of diaphragm 8 first moves the auxiliary valve member 18 downward away from its seat permitting some flow of compressed air the chamber 26 and partially alleviating the closing bias acting on the main valve member. The continuing increase in control pressure acting on diaphragm 8, then causes annular surface 14 of the piston 9 to engage with the member 15 to unseat the member 15 from its seat 16 thereby opening a main valve way-through to chamber 26. A rapid increase of delivery pressure then occurs similarly to the build up described above. The diaphragm may then move upwards again and the main valve member 15 and auxiliary valve member 18 are reseated. Reduction of control pressure results in venting of delivery pressure as via 29 before.

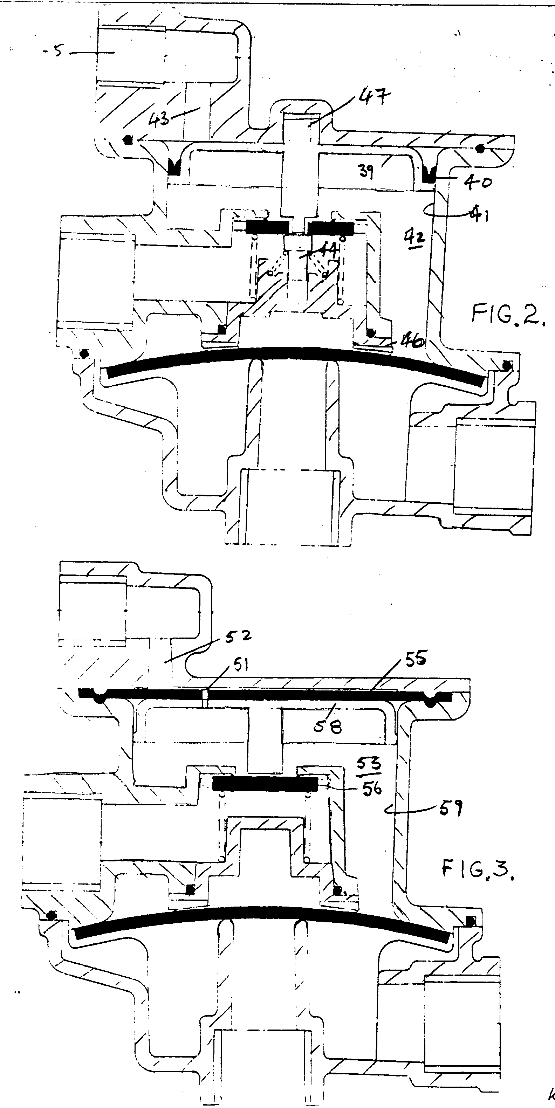

Referring now to Fig. 2, in this embodiment the diaphragm of Fig. 1 is replaced by the provision of a sliding annular lip-seal 40 between the piston down denoted by reference 39 and surface of the internal bore 41 of the housing. The auxiliary valve member 44 is guided by a stud 47 in the inner cover 46. The seal 40 is such as to permit limited reverse flow of compressed air between the respective second and first chambers 42 and 43, the passage 22 of Fig. 1 being omitted.

The operation of the valve assembly of Fig. 2 is substantially the same as the operation of Fig. 1, having regard for the production of pressure at the delivery port. However, following a reduction of control port pressure in chamber 43, some excess pressure in chamber 42 is able to flow past the lip-seal 40, chamber 43, port 8 and the control valve. This is closely accompanied as before by reduction of delivered pressure by venting to the vent port. By virtue of the possible backflow via 40, the response to control pressure reduction may be improved.

Referring to Fig. 3, in this embodiment the auxiliary valve which is present in Figs. 1 and 2 is now dispensed with and replaced by a limited flow orifice as indicated by reference 51. Accordingly for slow increases or decreases of control port pressure in chamber 52 are able to be transmitted via orifice 51 to chamber 53 without resulting in sufficient deflection of the diaphragm 55 to cause unseating of the main valve member 56. In such a case control port pressure is itself communicated from the second chamber via the substantially one way path around the periphery of member 27 to the delivery port. However, more substantial and faster increases of control port pressure results in such flow being supplemented by the unseating of the main valve member 56 by displacement of the diaphragm 55 due to greater pressure difference across it.

As a further alternative to the assembly of Fig. 3 the diaphragm 55 may be dispensed with and the clearance between the periphery of piston 58 and the cylindrical bore 59 may be chosen to provide the same restricted flow between chamber 52 and chamber 53.

Further variations and adaptations of the invention may be readily appreciated by those skilled in the design of relay valves. By way of example, the body parts may be constructed as mouldings or pressings. In particular it is to be expected that to form the upper and lower cover parts as metal pressings would be less expensive than the castings illustrated herein.

## Claims

1.  A fluid pressure relay valve assembly comprising a housing (1, 23) having a control pressure port (5) a supply pressure port (4) a vent port (7) a delivery port (6) and a fluid pressure responsive member (8, 9) forming a movable wall between a first chamber (25) in communication with the control pressure port and a second chamber (26) communicable with the supply port (4) and the delivery port (6), movement of said member in response to increase or decrease of the pressure in the first chamber (25) relative to the second chamber (26) being such as to respectively open or close an inlet valve (14, 16) between the supply port and the delivery port, characterised in that said second chamber (26) is communicable with the delivery port via means (27, 28) providing a substantially one-way path and means (27, 29) is provided operable to connect the delivery port to the vent port when the delivery port pressure exceeds the pressure in said second chamber.

2. A fluid pressure relay valve assembly as claimed in claim 1 characterised in that said inlet valve comprises a relatively large area main poppet valve member (15) and an ancilliary valve member (18), said ancilliary valve member (18) being movable to provide connection between the supply port (4) and said second chamber (26) in advance of said main member (15).

3. A fluid pressure relay valve assembly as claimed in claim 1 characterised in that a restricted direct flow path (51) is provided between the first chamber (52) and the second chamber (53) whereby pressure increase can occur in said second chamber (53) by virtue of flow from said first chamber (52), independently of opening of the inlet valve (56).

4. A fluid pressure relay valve assmebly as claimed in claim 3 characterised in that said pressure responsive member (55) comprises a diaphragm and said restricted flow path (51) comprises an orifice thereof.

5. A fluid pressure relay valve as claimed in claim 3 characterised in that said pressure responsive member comprises a piston slideable in a cylinder bore and said restricted flow path is provided by clearance between the piston and said cylinder bore.

6. A fluid pressure relay valve as claimed in claim 2 wherein main valve member (15) and said ancilliary valve member (18) are operable in turn by a projection (17, 13) of said pressure responsive member which passes through an aperture of said main member (15) to unseat the ancilliary member (18) from said aperture before engaging said main member (15).

7. A fluid pressure relay valve as claimed in claim 6, said projection having a vented passage (22) therethrough which is sealingly closable by engagement with said ancilliary valve member (18).

8. A fluid pressure relay valve as claimed in any preceding claim said means providing said substantially one-way path comprising a disc like member (27) a central area of which engages a vent valve seat (29) and a peripheral region of which engages a shoulder (28) provided within said housing.

FIG.1.

FIG.2.

FIG.3.